# FASCICULE DE BREVET EUROPEEN

(11) **EP 4 012 875 B1**
(45) Date de publication et mention de la délivrance du brevet: **28.08.2024**
(21) Numéro de dépôt: 21213583.4
(22) Date de dépôt: 10.12.2021
(51) Int. Cl.: H02J 3/28, H02J 3/32, H02J 3/38, H02J 7/34, H02J 7/35, F24D 11/02, C25B 1/04, H01M 8/00, F24D 3/08, F24D 17/02, H01M 16/00

(54) **SYSTÈME DE GESTION D'ÉNERGIE POUR LA CONSOMMATION OU LA DISTRIBUTION D'ÉNERGIE D'UN HABITAT RÉSIDENTIEL**
ENERGIEVERWALTUNGSSYSTEM ZUR VERWALTUNG DES ENERGIEVERBRAUCHS ODER DER ENERGIEVERTEILUNG EINES WOHNGEBÄUDES
ENERGY MANAGEMENT SYSTEM FOR MANAGING POWER CONSUMPTION OR POWER DISTRIBUTION OF A RESIDENTIAL DWELLING

(30) Priorité: 10.12.2020 FR 2013011
(43) Date de publication de la demande: 15.06.2022
(73) Titulaire: H2GREMM, 29510 Edern (FR)
(72) Inventeur: Rocheux, Alain, Quimper (FR); Driss, Ilies, Briec (FR); Le Strat, Olivier, Quimper (FR)
(74) Mandataire: Derriennic, Tangui Jean

(56) Documents cités:
- EP-A1- 2 560 261
- EP-A1- 2 772 983
- CN-A- 111 668 869
- CN-B- 103 441 564
- DE-A1- 102006 010 111
- DE-A1- 102012 002 688
- DE-A1- 102019 202 439
- DE-U1- 202017 006 617
- KR-A- 20170 078 395
- US-A1- 2020 119 421

## Description

### Domaine technique de l'invention

La présente invention concerne un système de gestion d'énergie pour la consommation ou la distribution d'énergie d'un habitat résidentiel. Elle s'applique, en particulier, aux systèmes énergétiques complets pour la consommation ou autoconsommation énergétique de l'habitat résidentiel.

Il s'agit de la production, du stockage et de la distribution d'énergie (électricité et chaleur) pour les besoins de l'habitat en lui-même.

La production est strictement issue de sources renouvelables (solaire photovoltaïque et thermique, éolien, etc).

### Technique antérieure

Le besoin d'autoconsommation pour l'habitat est aujourd'hui adressé par des solutions disparates, typiquement constituées de panneaux solaires et de batteries au Lithium (recyclabilité inexistante) ou Plomb (faibles performances). D'autres solutions à base de solaire thermique ou de géothermie existent mais ne peuvent couvrir le besoin sur le cycle annuel de fonctionnement.

Certains documents de l'art antérieur proposent également des systèmes pour la gestion d'énergie pour la consommation ou la distribution d'énergie d'un habitat résidentiel.

On connaît par exemple le document de publication WO201789468 qui décrit un système d'exploitation d'une installation d'énergie à domicile. Ce document décrit le fonctionnement de l'autoconsommation avec les éléments suivants : une batterie, un électrolyseur, un compresseur, une pile à combustible et une unité de commande ayant une gestion prédictive de l'énergie.

Toutefois, ce système décrit n'a pas un rendement satisfaisant. De plus, la solution décrite offre une faible modularité avec des données techniques figées.

On connaît aussi par exemple le document de publication DE202017006617, DE102006010111, CN103441564 et DE102012002688. Tous dans le domaine des systèmes d'exploitation d'une installation d'énergie. Toutefois, aucun des documents cités n'a pas un rendement satisfaisant.

### Présentation de l'invention

La présente invention vise à remédier à ces inconvénients avec une approche totalement novatrice.

Plus précisément, l'invention a pour objectif d'intégrer tous les composants dans un système unique et optimisant de fait le rendement global.

En particulier, un objectif de l'invention est de fournir certains composants spécifiquement pour ce système afin d'obtenir le rendement maximal (l'autonomie la plus élevée) à un cout financier raisonnable.

Un autre objectif de l'invention est de proposer une solution clé en main permettant d'avoir une indépendance (autoconsommation) énergétique maximale.

Ce système unique centralise le fonctionnement de tous les éléments de la chaîne. Le tout fait appel à des technologies ayant un impact environnemental le plus faible possible (absence de métaux rares, recyclable).

A l'usage du système, il n'émettra aucun gaz ou particules nocives.

La présente invention permet également de diminuer la demande sur le réseau national (effacement).

Un autre but de l'invention est d'augmenter la capacité à assurer la distribution d'hydrogène produit localement afin de pallier la quasi-absence de réseau. Le système est dimensionné pour assurer un appoint quotidien à un véhicule automobile ou un plein pour un deux-roues. La mise en réseau local de ce système permet une mutualisation de la ressource hydrogène pour la mobilité dans un cadre de troc entre utilisateurs.

Ces objectifs, ainsi que d'autres qui apparaîtront par la suite, sont atteints, selon un premier aspect, à l'aide d'un système de gestion d'énergie pour la consommation ou la distribution d'énergie d'un habitat selon la revendication indépendante 1.

Grâce à ces dispositions, les besoins évoqués ci-avant sont satisfait.

La compression électrochimique de l'hydrogène consiste à créer un flux de protons, au travers d'une membrane conductrice protonique, d'un compartiment à faible pression vers un compartiment à forte pression, en imposant une différence de potentiel électrique. Contrairement au compresseur mécanique, ce mode de compression ne contient pas de pièces en mouvements ceci permet de s'affranchir d'une maintenance coûteuse et permet d'avoir un appareil silencieux.

Dans un mode de réalisation, le dispositif de génération d'hydrogène est un électrolyseur de type AEM (acronyme d'Anion Exchange Membrane) utilisant une membrane semi-perméable pour laisser passer les anions.

Face à la technologie PEM (Proton Exchange Membrane) couramment utilisée, il a l'avantage de ne pas contenir de matériaux nobles et coûteux (Cobalt, Iridium ou Platine) et d'avoir de meilleurs rendements à des coûts plus faibles. Ledit système comporte en outre un compresseur électrochimique.

Le dispositif de génération d'hydrogène est de type AEM (Anion Exchange Membrane). Le dispositif a de très bons rendements et a besoin d'être associé à un compresseur. Selon une variante, le système comporte en outre un dispositif de compression de l'hydrogène configuré pour obtenir une pression suffisante dans les réservoirs. La pression suffisante est une pression pour satisfaire le débit d'hydrogène, par exemple 300bar.

Le compresseur électrochimique permet une compression silencieuse (pas de pièces en mouvement, pas d'usure, de vibration) et ne demandant pas d'entretien, pas d'huile. L'avantage principal par rapport à une compression mécanique habituellement employée est qu'il ne nécessite pas de stockage tampon entre l'électrolyseur et le compresseur ceci permet une simplification de l'assemblage, et une réduction des couts.

Le débit du compresseur peut s'adapter au débit de l'électrolyseur avec une grande précision, ceci permet de se passer de ce stockage tampon, à ce jour obligatoire pour les compresseurs conventionnels. Un autre avantage est que l'hydrogène sortant de l'électrolyseur n'a pas besoin d'être séché avant d'être utilisé dans le compresseur. C'est une étape obligatoire pour un compresseur mécanique, l'étape de séchage est également couteuse. Enfin la compression électrochimique permet d'atteindre des pressions bien plus élevées (plus de 1000bar) qu'un compresseur mécanique en un seul étage de compression, proche d'une compression isotherme.

Un compresseur mécanique aurait besoin de plusieurs étages de compressions pour atteindre ces pressions, afin d'éviter la dégradation du rendement isentropique.

L'utilisation d'un compresseur électrochimique directement après électrolyse n'est pas une pratique courante de l'homme du métier.

La présente invention apporte des solutions novatrices permettant d'améliorer le rendement global du système par rapport à des systèmes équivalents existants. L'utilisation de batteries sodium donne de meilleurs rendements en étant plus abordable et écologique que la solution lithium ou plomb que nous trouvons dans la majorité des solutions équivalentes. La technique de compression électrochimique permet de meilleurs rendements, une meilleure durée de vie et des coûts plus faibles que les autres moyens de compression utilisée, généralement des compresseurs mécaniques.

La présente invention permet une valorisation de la chaleur produite (Panneaux solaires thermiques, batterie électrochimique, électrolyseur, compresseur d'hydrogène, pile à combustible, convertisseurs de puissance et onduleur), celle-ci entraine une augmentation des performances de la pompe à chaleur.

L'hydrogène ou l'électricité produits peuvent alimenter des véhicules à l'aide d'un système de distribution.

Dans un mode de réalisation, l'excédent du dispositif de génération d'énergie renouvelable est dirigé vers le réseau électrique national.

Dans un mode de réalisation, le système de pile à combustible se met en fonctionnement lorsque l'état de charge de la batterie atteint une première valeur limite inférieure.

Dans un mode de réalisation, le système de pile à combustible ne se met pas en fonctionnement si le réservoir d'hydrogène est inférieur à une deuxième valeur limite inférieure.

Dans un mode de réalisation, le dispositif de génération d'hydrogène se met en fonctionnement lorsque la batterie atteint une valeur limite de charge de consigne.

Dans un mode de réalisation, le dispositif de génération d'hydrogène ne se met pas en fonctionnement si la température du ballon d'eau chaude est inférieure à une température de consigne.

Dans un mode de réalisation, le dispositif de stockage d'hydrogène utilise de l'hydrogène solide.

Ce mode de stockage permet à l'hydrogène de former des liaisons avec des alliages métalliques pour former des hydrures métalliques. Les atomes d'hydrogène sont « adsorbés » ou « désorbés » en fonction de la température et de la pression du milieu. La technologie du stockage sous forme solide présente un avantage en termes de sécurité car elle nécessite des pressions faibles, elle permet également d'atteindre une densité volumique supérieure à la compression sous forme gazeuse.

Dans un mode de réalisation, la pompe à chaleur utilise une partie de la chaleur générée par un autre élément du système parmi la batterie électrochimique ; le dispositif de génération d'hydrogène ; la pile à combustible ; des convertisseurs de puissance et d'un onduleur ; et le compresseur électrochimique.

Les convertisseurs permettent de modifier les valeurs de tension et d'intensité du courant délivrées par la source d'énergie électrique afin d'obtenir la puissance désirée pour chacun des équipements. L'onduleur permet de fournir des tensions et des courants alternatifs à partir d'une source d'énergie électrique. Il permet d'alimenter les charges de la maison en 220V à partir de la batterie.

Ce principe augmente le rendement de la pompe à chaleur.

### Brève description des figures

D'autres avantages, buts et caractéristiques de la présente invention ressortent de la description qui suit faite, dans un but explicatif et nullement limitatif, en regard des dessins annexés, dans lesquels :
[Fig. 1] la figure 1 représente un schéma de principe du système de l'invention ;
[Fig. 2] la figure 2 représente un schéma selon un mode de réalisation ;
[Fig. 3] la figure 3 représente un schéma selon un autre mode de réalisation.

### Description des modes de réalisation

Dans la suite du document nous conviendrons que l'utilisation du terme hydrogène pourra être remplacé par dihydrogène pour être plus exact.

L'hydrogène est l'élément le plus répandu sur Terre. Mais il n'existe pas sous forme pure. Il apparaît combiné dans des molécules plus ou moins complexes qui requièrent de l'énergie pour l'en extraire.

La présente invention décrit différent mode de réalisation pour exploiter ces nouvelles technologies pour utiliser cette énergie en sécurité et de manière efficace.

L'hydrogène a la particularité d'être très énergétique, il possède en effet le plus fort ratio masse/énergie avec une densité massique de 33 kWh par kilogramme et contient 3 fois plus d'énergie que le gazole par unité de masse et 2,5 fois plus que le méthane. En revanche il est caractérisé par une très faible densité volumique d'où la nécessité de le comprimer pour le stocker. Il est inodore, incolore, non polluant.

L'hydrogène peut être extrait de différentes manières, il est présent dans l'eau et les chaînes hydrocarbonées très variées. Actuellement, les solutions industrielles reposent principalement sur les gisements d'hydrocarbures comme le charbon ou le méthane mais assez peu sur l'électrolyse de l'eau. Toutefois, les grandes distances entre les sources d'énergie et les consommateurs tels qu'on les rencontre classiquement exigent le transport de l'énergie.

La présente invention décrit un système de conversion d'énergie en hydrogène le plus proche du lieu de consommation.

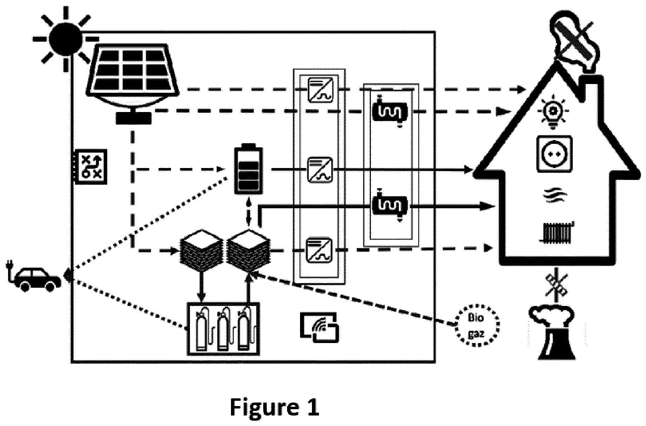

Le principe de la présente invention est décrit à la figure 1.

Le système de gestion d'énergie pour la consommation ou la distribution d'énergie d'un habitat résidentiel est un système énergétique pour l'habitat individuel péri-urbain et rural, apportant un niveau d'autonomie élevé par rapport aux réseaux (>80%).

Le système de commande est capable d'optimiser le fonctionnement de chaque équipement pour garantir une meilleure durée de vie et un cout énergétique le plus faible possible.

Dans un mode réalisation, un système de rack est mis en place pour y intégrer l'électrolyseur, la batterie, le compresseur et la pile à combustible. Chacun des éléments générant de la chaleur, celle-ci est récupérée pour être valorisée par la pompe à chaleurs en augmentant le rendement de celle-ci à l'aide d'un échangeur thermique. Une pompe à chaleur air-eau est généralement composée de 4 éléments : un évaporateur, un compresseur, un condenseur et un détendeur. Ces éléments transforment les calories captées dans l'air en chaleur. Cette chaleur permet de chauffer de l'eau, qui circule ensuite dans les radiateurs ou à travers un plancher chauffant.

Pour pallier le caractère intermittent de certains types de dispositif de génération d'énergie renouvelable comme un générateur photovoltaïque ou éolien, la présence d'un dispositif de stockage est indispensable, sa principale fonction est d'accumuler l'énergie excédentaire produite par le générateur et, lorsque la production de ce dernier est déficitaire, de fournir le complément nécessaire à l'utilisateur.

La technologie Sodium-ion a un fonctionnement, très similaires à la batterie Lithium-ion (avec une densité énergétique plus faible) elle ne nécessite pas l' utilisation de lithium ni de cobalt (ces matériaux entrainent de nombreux problèmes sociaux ou environnementaux). Cette technologie permet des plages de charge/décharge plus importants ainsi que la possibilité d'utiliser des courants en charge ou décharge plus élevés que les batteries Lithium, permettant notamment d'absorber des pics de consommation sans danger, ni recours à des super-capacités. Le dégagement de chaleur à la charge ou la décharge est nettement inférieur aux technologies Lithium et permet une utilisation sans risque. Le prix de cette technologie est également inférieur aux batteries à base de Lithium.

Selon cet exemple, l'énergie est principalement issue des panneaux photovoltaïques et/ou d'une ou plusieurs éoliennes. L'énergie produite est envoyée vers la pompe à chaleur en priorité puis recharge les batteries et enfin vers l'électrolyseur convertissant l'énergie électrique en hydrogène. Lorsque les réservoirs d'hydrogène sont pleins, le surplus électrique est injecté sur le réseau national.

A l'inverse, en période de déficit de production, les batteries seront utilisées en priorité. En cas de décharge trop importante, la pile à combustible prend le relai en convertissant l'hydrogène en électricité, enfin un soutirage sur le réseau reste une solution en dernier choix.

Une solution de distribution pour véhicules électrique (hydrogène ou batterie) complète également le système.

Selon un exemple de réalisation, il est nécessaire d'hybrider le système pour bénéficier des avantages des batteries et du stockage d'Hydrogène.

Ce couplage permet de profiter de leurs propriétés complémentaires. Par exemple, le démarrage d'une unité de stockage d'énergie à base d'hydrogène se fait selon un temps de démarrage. Selon un exemple le temps de démarrage est à peu près en une minute. Ce régime transitoire ne lui permet pas d'être utilisé seul comme système de stockage d'énergie. L'association avec les batteries permet de palier au temps de démarrage avec de l'énergie disponible instantanément.

Selon un autre exemple de réalisation, en cas de défaut d'un des éléments du système, les batteries permettent de fournir de l'énergie nécessaire à la mise en sécurité du système.

L'hybridation du stockage permet aussi de conduire à améliorer les performances du système électrique. Une bonne stratégie de gestion de l'énergie permet de faire fonctionner les différentes unités de stockage dans des plages où leur rendement est maximisé.

Le stockage par batteries à l'avantage de fournir de l'électricité à puissance nominale instantanément, cependant sa densité d'énergie volumique est faible. À l'inverse, le stockage sous forme d'hydrogène comprimé permet de stocker une énergie beaucoup plus élevée dans un volume équivalent, il a également l'avantage sur le long terme de ne pas perdre de rendement en cas de cycle répété charge-décharge à des valeurs extrêmes.

Pour atteindre un maximum d'autonomie, principalement en hiver, l'énergie excédentaire produite en été doit être stockée. Avec un système composé uniquement de batteries électrochimiques, il est nécessaire de déconnecter le flux entre la source d'énergie renouvelable (panneaux photovoltaïques et/ou éolienne) et les batteries lorsque celles-ci atteignent leur état de charge maximum. Avec un système de stockage hybride bien dimensionné et une gestion efficace de l'énergie, on peut alors maximiser l'utilisation de l'énergie produite et donc accroître l'efficacité et la rentabilité du système global.

### Orientation de l'électricité produite par la source renouvelable :

Le système oriente l'électricité vers la pompe à chaleur :
En priorité, l'énergie issue du dispositif de génération d'énergie renouvelable, par exemple des panneaux solaires thermiques ou photovoltaïques, est envoyée vers la pompe à chaleur. L'eau chaude est stockée dans un ballon tampon relié aux circuits de chauffage et d'eau chaude sanitaire de l'habitat. Des niveaux de température pour le ballon sont mis en place pour déterminer la mise en marche ou l'arrêt de la pompe à chaleur. Un ballon d'eau chaude (ou cumulus) est un chauffe-eau à accumulation. Il va stocker une certaine quantité d'eau qui va être chauffée sur une période donnée (souvent en heures creuses). L'avantage de ce système est de consommer moins de puissance que les chauffe-eaux instantanés. Deux contrôles sont mis en place, le premier est actif de 18h à 8h avec des températures faibles. Ceci permet de limiter la consommation électrique la nuit. Un deuxième contrôle est actif de 8h à 18h avec des températures plus élevées car les besoins en eau chaude sont supérieurs la journée.

Les plages de températures de chaque contrôle sont définies par une température inférieure et supérieure. Lorsque la température inferieure est atteinte, la pompe à chaleur se met en marche, lorsque la limite supérieure est atteinte, elle se stoppe. Dans le cas du premier contrôle (nuit), la pompe à chaleur se met en marche à une température Tmin de consigne inférieure (par exemple 48°C) et s'arrête à une température de consigne Tinf (par exemple 55°C). Dans le cas du deuxième contrôle (jour), la pompe à chaleur se met en marche lorsque la température est comprise entre la température de consigne Tmin et une température de consigne Tsup, qui est supérieure ou égale à Tinf. La pompe à chaleur se stoppe lorsque la température de consigne Tmax (par exemple 65°C) est atteinte.

Si Tmin est atteinte, le mode marche forcée est activé, c'est-à-dire que la pompe à chaleur fonctionne à puissance maximale pour atteindre la température de consigne (par exemple 53°C). Au-dessus de cette température de consigne, la pompe à chaleur fonctionne à puissance minimale.

Exemple de fonctionnement, en cas de déficit du dispositif de génération d'énergie renouvelable, l'énergie manquante est prélevée en priorité sur la batterie. Si celle-ci atteint sa valeur limite inférieure (par exemple 5% de charge) (il s'agit de la première valeur limite inférieure), la pile à combustible démarre et prend le relais. Si la pile à combustible manque de puissance ou si le stock d'hydrogène est inférieur à sa deuxième valeur limite inférieure (par exemple 4bar), l'énergie est prélevée sur le réseau électrique.

L'état de charge de la batterie électrochimique est mesuré par l'intermédiaire de son système de régulation (BMS - Battery Management System). Cet état de charge est déterminé à partir de la tension mesurée à ses bornes. Dans notre cas, un état de charge limite inférieur est déterminé en fonction des besoins de puissance installée dans l'habitat : par exemple 5% de la charge maximum, correspondant à 5% de la plage de tension. Si celle-ci s'étend de 32 à 54 volts, un état de charge de 5% correspond à une tension de 33,1V.

L'état de charge du conteneur d'hydrogène est mesuré par un tandem manomètre/thermomètre. La pression interne admissible est comprise entre 1bar et une valeur limite supérieure (par exemple 450 bar). 1 bar étant la pression atmosphérique et la valeur limite supérieure étant la pression maximale d'exploitation du réservoir (par exemple 450 bar). Le tandem manomètre/thermomètre transmet ses mesures à l'EMS (Energy Management Système), si la pression mesurée atteint la valeur limite inférieure, cela signifie que la pile à combustible n'a plus suffisamment de pression pour délivrer de courant, le réseau prend donc le relais.

Après avoir orienté l'électricité produite vers la batterie électrochimique, l'électricité est orientée vers le dispositif de génération d'hydrogène, comportant un électrolyseur.

La stratégie d'arrêt et démarrage de l'électrolyseur est définie suivant différents paramètres. Les paramètres pris en compte sont l'état de charge des batteries et la température du ballon thermique.

L'électrolyseur se met en marche dans le cas où la batterie atteint une valeur limite de charge (par exemple 70% de charge). Il ne se met pas en fonctionnement si la température du ballon est inférieure à une température de consigne (par exemple 50°C) ou si le remplissage du réservoir d'hydrogène est supérieur à une valeur limite supérieure (par exemple 99%).

À l'inverse, l'électrolyseur se met à l'arrêt lorsque l'état de charge de la batterie atteint une valeur limite (par exemple 50%) ou si la température du ballon atteint la température de consigne basse (par exemple 46°C) ou si le remplissage du réservoir d'hydrogène atteint un état de charge maximum (par exemple 99%).

### Gestion de l'électricité vers la pile à combustible :

La stratégie d'arrêt et démarrage de la pile à combustible est définie suivant différents paramètres. Les paramètres pris en compte sont l'état de charge des batteries et le remplissage du réservoir d'hydrogène.

La pile à combustible se met en marche dans le cas où l'état de charge de la batterie atteint une première valeur limite inférieure (par exemple 5%, significativement inférieure aux limites recommandées pour des batteries Lithium ou Plomb). Celle-ci ne se met pas en fonctionnement si le remplissage du réservoir d'hydrogène est inférieur à la deuxième limite inférieure (par exemple 1%). Dans ce cas l'énergie est prélevée sur le réseau électrique.

Lorsque l'état de charge de la batterie atteint une valeur limite (par exemple 10%) ou lorsque le remplissage du réservoir d'hydrogène est inférieur à une valeur limite, la pile à combustible est stoppée.

Lorsque la pile à combustible est en fonctionnement, elle opère à sa puissance optimale de rendement ou à la valeur la plus proche en fonction de l'état de la demande de puissance. Ceci permet d'augmenter sa durée de vie.

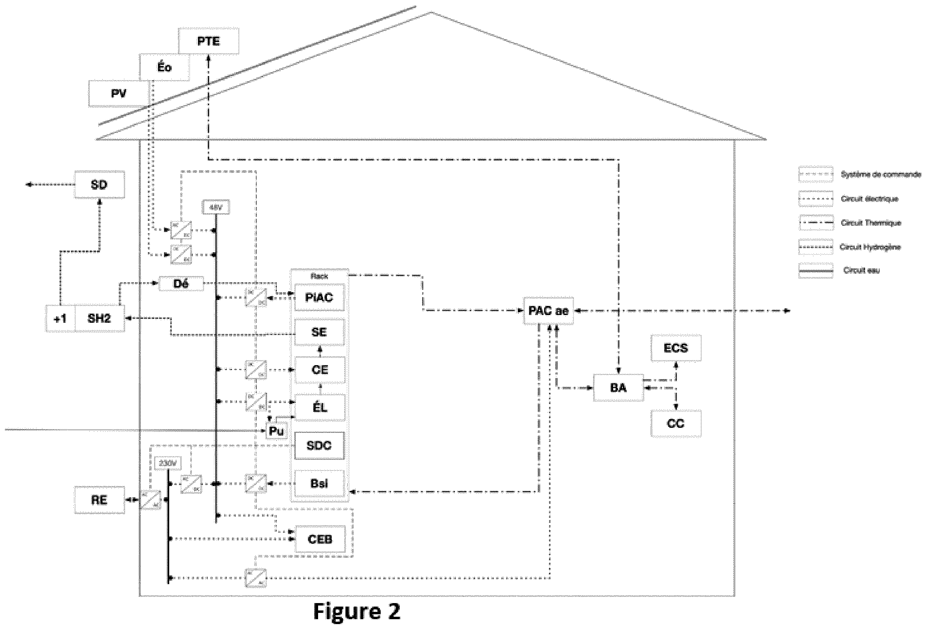

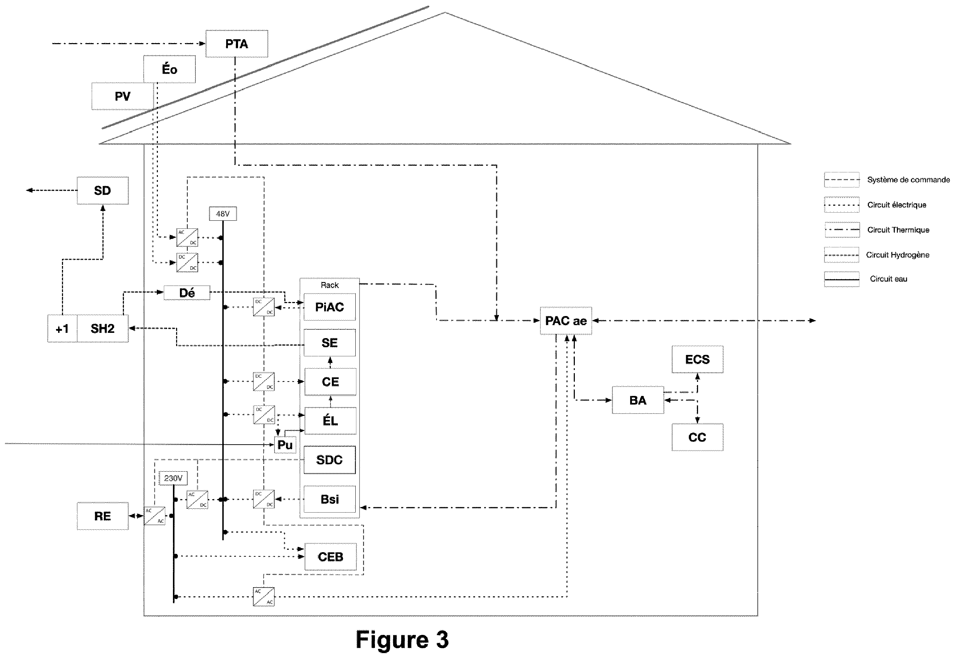

Les figures 2 et 3 montrent deux exemples de réalisation. Ces figures ont des éléments en commun qui vont être décrit ci-après et les différences seront décrites pour chaque figure.

### Les éléments en commun :

La source du dispositif de génération d'énergie renouvelable peut être de différentes origines. Dans le cas présenté il s'agit d'une source éolienne Éo et photovoltaïque PV. La puissance apportée varie de 10 à 20kW suivant les besoins de l'habitat résidentiel.

Selon un autre exemple, il s'agit de panneaux solaires thermiques PTE qui sont associés aux autres dispositifs de génération d'énergie renouvelable. Cette source d'énergie complémentaire permet d'améliorer le rendement global du système, permettant de chauffer les circuits d'eau de chauffage et sanitaire par l'intermédiaire d'un échangeur thermique, sans passer par l'étape électrique.

Un bus de 48V distribue l'énergie aux différents composants du système selon le besoin. Un deuxième bus de 230V est utilisé pour les différentes charges électriques CEB de l'habitat résidentiel.

Les convertisseurs de puissance sont représentés sur les figures avec les indications DC (courant continu) ou AC (courant alternatif). L'onduleur n'est pas représenté sur les figures.

En cas de manque d'énergie dans les batteries Bsi et stockage hydrogène, le réseau électrique RE fournit l'énergie nécessaire en attendant d'avoir de nouveau des énergies renouvelables disponibles. Le réseau électrique RE est également connecté sur le bus 230V.

En priorité, l'énergie est envoyée vers la pompe à chaleur PACae, l'eau chaude est stockée dans un ballon BA relié au circuit de chauffage CC et circuit d'eau chaude sanitaire ECS. L'énergie excédentaire est dirigée vers les batteries électrochimiques. Elles ont une capacité de stockage variant de 10 à 30kWh selon les besoins de l'habitat résidentiel. Enfin, l'énergie excédentaire restante est dirigée vers le dispositif de génération d'hydrogène, appelé pour la suite électrolyseur Él, convertissant l'énergie électrique en hydrogène. Lorsque les réservoirs d'hydrogène SH2 sont pleins. Le surplus électrique est injecté sur le réseau.

A l'inverse, en période de déficit de production, les batteries électrochimiques sont utilisées en priorité, en cas de décharge trop importante, la pile à combustible PiAC prend le relai en convertissant l'hydrogène en électricité, enfin un soutirage sur le réseau électrique reste une solution de dernier choix.

Lorsque la batterie n'a plus la capacité de délivrer suffisamment de courant, le gaz stocké dans les réservoirs est dépressurisé à l'aide d'un détendeur Dé à une pression inferieure à 10 bar avant d'être transformé en électricité par la pile à combustible. La pile à combustible a une capacité de 1 à 4 kW.

Une solution de distribution SD pour véhicules électriques (hydrogène ou batterie) complète le système. Pour les véhicules hydrogène, un réservoir est dédié à cette tâche. En effet, il est nécessaire d'avoir une pression suffisante permettant de remplir le réservoir du véhicule. Ce réservoir aura toujours une pression de consigne minimum (par exemple 450 bar) indépendamment des autres réservoirs (noté +1 sur les figures), le remplissage se fait à l'aide d'une électrovanne dédiée. Un système de distribution adapté au type de véhicule (vélo, voiture, scooter...) y est connecté.

Le dispositif de commande SDC contrôle chaque transformateur électrique, il choisit de les mettre en fonctionnement ou non et fait varier les puissances suivant les besoins. Le contrôle s'effectue à l'aide des paramètres prédéfini et des données extérieures reçues (météo, profils de consommation...).

Selon une variante, le dispositif de commande est contrôlé par l'utilisateur via un terminal mobile ou tout autre ordinateur à distance.

L'ensemble des éléments générant de la chaleur sont placés dans un rack, un système de récupération est mis en place pour diriger la chaleur produite vers la pompe à chaleur, améliorant ainsi son rendement.

### La figure 2 décrit certains éléments spécifiques :

Cette figure montre que des panneaux solaires thermiques avec circulation d'eau sont installés. L'eau chaude est envoyée directement au niveau du ballon BA les calories apportées seront récupérées à l'aide d'un échangeur thermique.

Cette figure montre un électrolyseur à membranes échangeuses d'ions et un compresseur électrochimique CE.

L'électrolyseur nécessite de l'eau pure pour fonctionner, une solution de purification d'eau Pu est mise en place. Le gaz produit est compressé puis séché à l'aide d'un sécheur SE avant d'être stocké.

Le séchage est réalisé à l'aide d'un filtre absorbant les molécules de H20 et est perméable à l'hydrogène. Le séchage supprime des résidus de molécules d'eau (H2O) dans l'H2. Ce séchage est nécessaire pour le bon fonctionnement d'une pile à combustible H2.

Le compresseur électrochimique compresse le gaz jusqu'à la pression maximum d'exploitation (par exemple 450 bar). La capacité de stockage des réservoirs est définie en fonction des besoins énergétiques du bâtiment et du niveau d'autonomie recherché (par exemple de 800 à 2500 litres).

Afin de diriger un minimum d'électricité vers la pompe à chaleur PACae pour améliorer le rendement global du système, les panneaux solaires thermiques envoient directement de l'eau chaude au niveau du ballon à l'aide d'un échangeur thermique.

### La figure 3 décrit certains éléments spécifiques :

Des panneaux solaires thermiques avec circulation d'air PTA sont installés. Ces panneaux solaires thermiques, envoient de l'air chaud vers la pompe à chaleur pour améliorer son rendement.

Cette figure montre un dispositif de génération d'hydrogène est de type AEM avec un compresseur.

L'hydrogène est ensuite stocké dans des réservoirs d'une capacité variant de 800 à 2500 litres.

Afin de diriger un minimum d'électricité vers la pompe à chaleur pour améliorer le rendement global du système, les panneaux solaires thermiques avec circulation d'air envoient directement de l'air chaud au niveau de l'arrivée d'air de la pompe à chaleur améliorant ainsi son rendement.

### LISTE DES SIGNES DE RÉFÉRENCE

**[Table 1]**

| Références | Désignations |
|---|---|
| +1 | +1 bouteille (mobilité) |
| BA | Ballon d'eau chaude |
| Bsi | Batteries sodium-ion |
| CC | Circuit chauffage |
| CEB | Charge électrique du Bâtiment |
| Dé | Détendeur |
| ECS | Circuit eau chaude sanitaire |
| ÉL | Électrolyseur |
| Éo | Éolienne |
| PAC ae | Pompe à chaleur air-eau |
| PiAC | Pile à combustible |
| PV | Panneaux photovoltaïques |
| RE | Réseau électrique |
| SD | Système de distribution |
| SDC | Système de commande |
| SE | Sécheur |
| SH2 | Stockage H2 |
| CE | Compresseur électrochimique |
| PTE | Panneaux Thermiques eau |
| Pu | Purificateur |
| PTA | Panneau thermique air |

## Revendications

1. Système de gestion d'énergie pour la consommation ou la distribution d'énergie d'un habitat résidentiel, qui comporte :
- un dispositif de génération d'énergie renouvelable configuré pour utiliser de l'énergie renouvelable pour générer de l'électricité,
- au moins une batterie électrochimique ;
- un dispositif de génération d'hydrogène configuré pour utiliser de l'énergie électrique pour générer de l'hydrogène ;
- un dispositif de stockage d'hydrogène (SH2) configuré pour stocker l'hydrogène généré dans au moins un réservoir d'hydrogène par le dispositif de génération d'hydrogène ;
- un système de pile à combustible configuré pour utiliser l'hydrogène stocké dans le dispositif de stockage d'hydrogène pour produire de l'énergie électrique ; et
- un dispositif de commande (SDC) ;
- une pompe à chaleur air-eau (PACae) comportant un ballon d'eau chaude (BA) ;
**caractérisé en ce que** :
l'habitat résidentiel est alimenté en électricité en priorité par le dispositif de génération d'énergie renouvelable, la batterie, la pile à combustible puis le réseau électrique ;
la batterie est une batterie sodium-ion et le dispositif de commande (SDC) est configuré pour exécuter les commandes successives suivantes : l'électricité produite par le dispositif de génération d'énergie renouvelable est dirigée vers la pompe à chaleur (PACae), puis vers la batterie, puis vers le dispositif de génération d'hydrogène jusqu'à ce que les réservoirs d'hydrogène soient pleins ;
le système comporte en outre un compresseur électrochimique comportant un flux de protons, au travers d'une membrane conductrice protonique, d'un compartiment à faible pression vers un compartiment à forte pression, en imposant une différence de potentiel électrique.

2. Système selon la revendication 1, dans lequel l'excédent du dispositif de génération d'énergie renouvelable est dirigée vers le réseau électrique (RE) national.

3. Système selon la revendication 1, dans lequel le système de pile à combustible (PiAC) se met en fonctionnement lorsque l'état de charge de la batterie atteint une première valeur limite inférieure.

4. Système selon la revendication 1, dans lequel le système de pile à combustible (PiAC) ne se met pas en fonctionnement si le réservoir d'hydrogène est inférieur à une deuxième valeur limite inférieure.

5. Système selon la revendication 1, dans lequel le dispositif de génération d'hydrogène se met en fonctionnement lorsque la batterie atteint une valeur limite de charge de consigne.

6. Système selon la revendication 1, dans lequel le dispositif de génération d'hydrogène ne se met pas en fonctionnement si la température du ballon d'eau chaude (BA) est inférieure à une température de consigne.

7. Système selon la revendication 1, dans lequel le dispositif de génération d'hydrogène est un électrolyseur de type AEM (Anion Exchange Membrane) utilisant une membrane semi-perméable pour laisser passer les anions.

8. Système selon la revendication 1, dans lequel le dispositif de stockage d'hydrogène (SH2) utilise de l'hydrogène solide.

9. Système selon la revendication 1, dans lequel la pompe à chaleur utilise une partie de la chaleur générée par un autre élément du système parmi la batterie électrochimique ; le dispositif de génération d'hydrogène ; la pile à combustible ; des convertisseurs de puissance et onduleur ; et le compresseur électrochimique.

## Patentansprüche

1. Energieverwaltungssystem für den Energieverbrauch oder die Energieverteilung eines Wohnbereichs, das Folgendes umfasst:
- eine Vorrichtung zur Erzeugung von erneuerbarer Energie, die so konfiguriert ist, dass sie erneuerbare Energie verwendet, um Elektrizität zu erzeugen,
- mindestens eine elektrochemische Batterie;
- eine Vorrichtung zur Erzeugung von Wasserstoff, die so konfiguriert ist, dass sie elektrische Energie verwendet, um Wasserstoff zu erzeugen;
- eine Vorrichtung zur Speicherung von Wasserstoff (SH2), die so konfiguriert ist, dass sie Wasserstoff, der von der Wasserstofferzeugungsvorrichtung in mindestens einem Wasserstofftank erzeugt wurde, speichert;
- ein Brennstoffzellensystem, das so konfiguriert ist, dass es den in der Wasserstoffspeichervorrichtung gespeicherten Wasserstoff verwendet, um elektrische Energie zu produzieren; und
- eine Steuervorrichtung (SDC);
- eine Luft-Wasser-Wärmepumpe (PACae), die einen Warmwasserspeicher (BA) umfasst;
**dadurch gekennzeichnet, dass**:
der Wohnbereich von der Vorrichtung zur Erzeugung erneuerbarer Energie, der Batterie, der Brennstoffzelle und dann dem Stromnetz prioritär mit Elektrizität versorgt wird;
die Batterie eine Natrium-Ionen-Batterie ist und die Steuervorrichtung (SDC) so konfiguriert ist, dass sie die folgenden aufeinanderfolgenden Befehle ausführt: die von der Vorrichtung zur Erzeugung erneuerbarer Energie produzierte Elektrizität wird zur Wärmepumpe (PACae), dann zur Batterie, und dann zur Wasserstofferzeugungsvorrichtung geleitet, bis die Wasserstofftanks voll sind;
das System weiter einen elektrochemischen Verdichter umfasst.

2. System nach Anspruch 1, wobei der Überschuss der Vorrichtung zur Erzeugung erneuerbarer Energie zum nationalen Stromnetz (RE) geleitet wird.

3. System nach Anspruch 1, wobei sich das Brennstoffzellensystem (PiAC) einschaltet, wenn der Ladezustand der Batterie einen ersten unteren Grenzwert erreicht.

4. System nach Anspruch 1, wobei sich das Brennstoffzellensystem (PiAC) nicht einschaltet, wenn der Wasserstofftank unter einem zweiten unteren Grenzwert liegt.

5. System nach Anspruch 1, wobei sich die Wasserstofferzeugungsvorrichtung einschaltet, wenn die Batterie einen Soll-Ladegrenzwert erreicht.

6. System nach Anspruch 1, wobei sich die Wasserstofferzeugungsvorrichtung nicht einschaltet, wenn die Temperatur des Warmwasserspeichers (BA) unter einer Solltemperatur liegt.

7. System nach Anspruch 1, wobei die Wasserstofferzeugungsvorrichtung ein Elektrolyseur vom Typ AEM (Anion Exchange Membrane) ist, der eine semipermeable Membran verwendet, um die Anionen durchzulassen.

8. System nach Anspruch 1, wobei die Wasserstoffspeichervorrichtung (SH2) festen Wasserstoff verwendet.

9. System nach Anspruch 1, wobei die Wärmepumpe einen Teil der Wärme, die von einem anderen Element des Systems aus der elektrochemischen Batterie; der Wasserstofferzeugungsvorrichtung; der Brennstoffzelle; Leistungswandlern und Wechselrichter; und dem elektrochemischen Verdichter erzeugt wird, verwendet.

## Claims

1. An energy management system for energy consumption or distribution of a residential dwelling, which includes:
- a renewable energy generation device configured to use renewable energy to generate electricity,
- at least one electrochemical battery;
- a hydrogen generation device configured to use electrical energy to generate hydrogen;
- a hydrogen storage device (SH2) configured to store the hydrogen generated in at least one hydrogen tank by the hydrogen generation device; - a fuel cell system configured to use the hydrogen stored in the hydrogen storage device to produce electrical energy; and
- a control device (SDC);
- an air-water heat pump (PACae) including a hot water tank (BA);
**characterised in that**:
the residential dwelling is supplied with electricity in priority by the renewable energy generation device, the battery, the fuel cell and then the power grid;
the battery is a sodium-ion battery and the control device (SDC) is configured to execute the following successive commands: the electricity produced by the renewable energy generation device is directed towards the heat pump (PACae), and then towards the battery, and then towards the hydrogen generation device until the hydrogen tanks are full;
the system further includes an electrochemical compressor.

2. The system according to claim 1, wherein the excess of the renewable energy generation device is directed towards the national power grid (RE).

3. The system according to claim 1, wherein the fuel cell system (PiAC) starts operation when the state-of-charge of the battery reaches a first lower limit value.

4. The system according to claim 1, wherein the fuel cell system (PiAC) does not start operation if the hydrogen tank is lower than a second lower limit value.

5. The system according to claim 1, wherein the hydrogen generation device starts operation when the battery reaches a setpoint charge limit value.

6. The system according to claim 1, wherein the hydrogen generation device does not start operation if the temperature of the hot water tank (BA) is lower than a setpoint temperature.

7. The system according to claim 1, wherein the hydrogen generation device is an AEM (Anion Exchange Membrane) type electrolyser using a semi-permeable membrane to let the anions pass.

8. The system according to claim 1, wherein the hydrogen storage device (SH2) uses solid hydrogen.

9. The system according to claim 1, wherein the heat pump uses part of the heat generated by another element of the system amongst the electrochemical battery; the hydrogen generation device; the fuel cell; power converters and inverter; and the electrochemical compressor.
